# EUROPEAN PATENT APPLICATION

(11) **EP 0 975 142 A2**
(43) Date of publication of application: **26.01.2000**
(21) Application number: 99305061.6
(22) Date of filing: 28.06.1999
(51) Int. Cl.: H04N 1/107

(54) **Hand held scanning device**

(30) Priority: 22.07.1998 US 120637
(71) Applicant: Hewlett-Packard Company, Palo Alto, California 94304 (US)
(72) Inventor: Dow, James C., Fort Collins, CO 80526 (US); Berg, Thomas E., Fort Collins, CO 80526 (US); Sims, David J., Fort Collins, CO 80525 (US); Henderson, Scott, Brooklyn, NY 11231 (US); Stowell, Davin, New York, NY 10003 (US)
(74) Representative: Powell, Stephen David

(57) **Abstract**

A hand held electronic scanning device (10) has a top portion (90) with an outer configuration which permits the hand of a user to be comfortably positioned thereon at many different locations. The top portion may comprise a cover (34), a housing for the cover being resiliently deflectable, thus enabling attachment or removal from the hand held scanning device by squeezing the cover.

## Description

The present invention relates generally to hand held capture and communicate devices also referred to as scanning devices, for forming scanned electronic images of originals and more particularly to hand held scanning devices to accommodate being grasped comfortably by the user at a variety of places.

In the United States Patent No. 5,578,813 and 5,644,139, which are incorporated herein by reference thereto, there is disclosed apparatus and method for forming a scanned electronic image which includes an imaging sensor and at least one navigation sensor. A hand held scanning device is moved over the object to be scanned. The hand held scanning devices disclosed in the above-identified patents are of a rectangular configuration having relatively planar surfaces. Since the hand held scanning device may be used by an operator over an extended period of time, it is desirable that the hand held scanning device may be held comfortably by the operator and that the hand of the operator may be positioned at a variety of locations on the hand held scanning device.

This invention provides a hand held scanning device that has a top portion having an outer configuration that is substantially curvilinear so that it is compatible to the inner surface of the palm, fingers and thumb of the user to permit the grasping of the top portions at a plurality of different locations by the inner surface of the palm, fingers and thumb of the user. The top portion may comprise a cover.

In a preferred embodiment of the invention, the hand held scanning device has a housing for holding the various components for its desired method of operation as described in the above-identified patents. The housing has a front portion having a front surface. A plurality of control buttons are mounted in the front portion and extend through openings in the front surface for contact by the operator of the hand held scanning device.

In a preferred embodiment of the invention, the batteries required for the use of the hand held scanning device are held in receptacles in a top portion of the housing. A cover is removably connected to the top portion. The cover has an outer configuration that is substantially curvilinear and at least a portion of which is preferably semi-ellipsoidal so that it is compatible with the inner surface of the palm, fingers and thumb of the hand of the operator. The cover preferably comprises an inner layer and an outer layer. The inner layer is formed from a relatively hard plastic material such as polycarbonate, which is capable of transmitting infra red light, or other materials having similar characteristics. The outer layer is formed from a relatively soft plastic material such as that sold under the trademark Santoprene® by Monsanto or by Advanced Elastomer Systems 388 South Main Street, Akron, Ohio 44311, or other materials having similar characteristics. The outer layer is preferably molded over the inner layer.

The inner surface of the palm, fingers and thumb of the operator may be defined as having a longitudinal axis extending in a direction generally parallel to the fingers. The cover also has a longitudinal axis extending parallel to the scanning window at the bottom of the scanner. The cover is compatible with the inner surface of the palm, fingers and thumb of the operator so that the hand held scanning device may be comfortably held by the operator with both of the longitudinal axes extending generally in the same directions or with the longitudinal axis of the cover extending in a direction transverse to the longitudinal axis of the inner surface of the palm, fingers and thumb or at various angular relationships therebetween. It is understood that the batteries for the operation of the hand held scanning device may be secured in receptacles located in a different portion of the housing. If so, the top portion of the housing may still have an outer configuration corresponding to that described above.

The cover or top portion of the housing may also be provided with an opening in the outer layer that exposes a raised portion of the inner layer which may be formed from a material capable of transmitting infra-red signals. The top portion of the housing in such an embodiment would be provided with infra-red LEDs.

The relatively soft material used to provide the outer layer of the cover facilitates gripping of the scanner by providing a surface that has a relatively high coefficient of friction with respect to a user's hand. Thus, a user is less likely to have the scanner slip from his hand than if the cover were constructed with conventional material. The inner layer functions to maintain the shape of the battery cover and protect the contents thereof. It is also sufficiently resilient to allow moderate deformation, thereof to facilitate easy removal of the cover by a pinching action of the user's hand. Yet it is sufficiently stiff to prevent undesired decoupling with the scanner during operation. Projections formed in the inner layer facilitate coupling and decoupling.
Fig. 1 is a front elevational view of a hand held scanning device.
Fig. 2 is a back elevational view of Fig. 1.
Fig. 3 is a bottom plan view of Fig. 1.
Fig 4 is atop plan view of Fig. 1.
Fig. 5 is a side elevational view of the right side of Fig. 1 on a support surface.
Fig. 6 is a side elevational view of the left side of Fig. 1 on a support surface.
Fig. 7 is a top plan view of Fig. 1 with the cover removed.
Fig. 8 is a front elevational view of the cover.
Fig. 9 is a bottom plan view of Fig. 8.
Fig. 10 is a side elevational view of the right side of Fig. 8.
Fig. 11 is a semi-ellipse.
Fig. 12 is a perspective view of a transparent member.

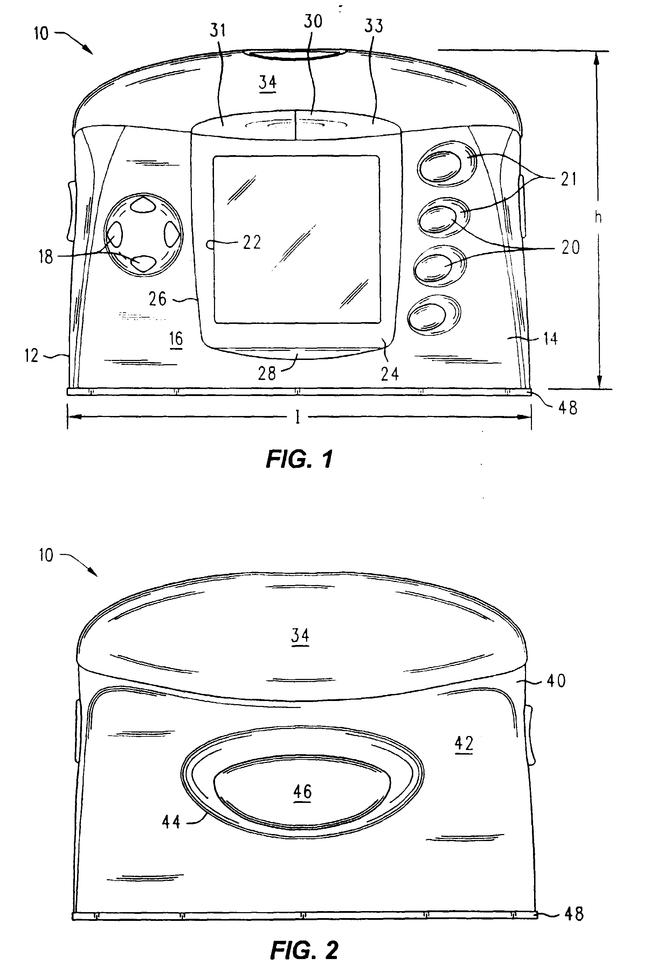

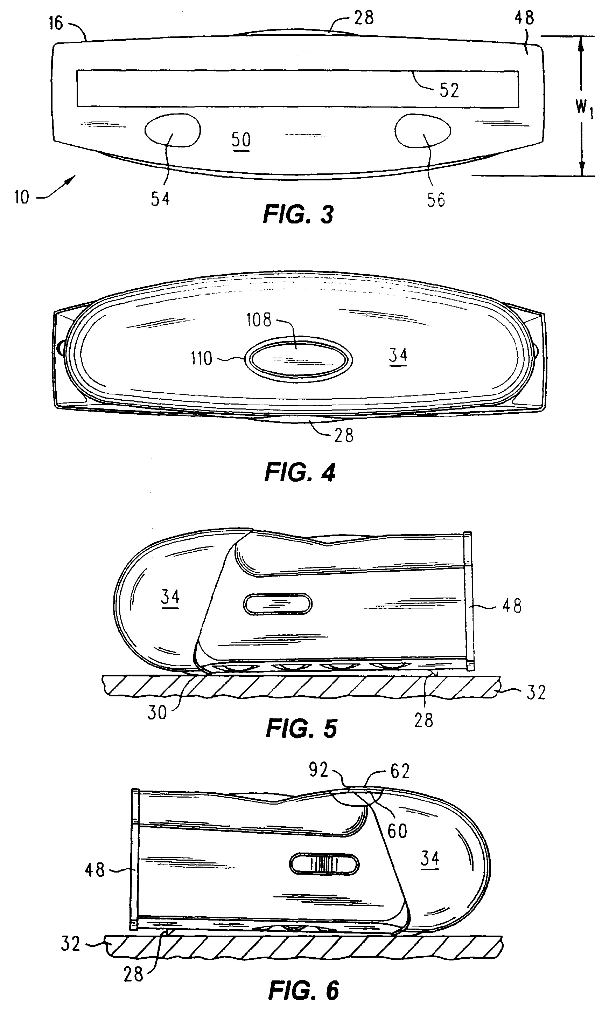

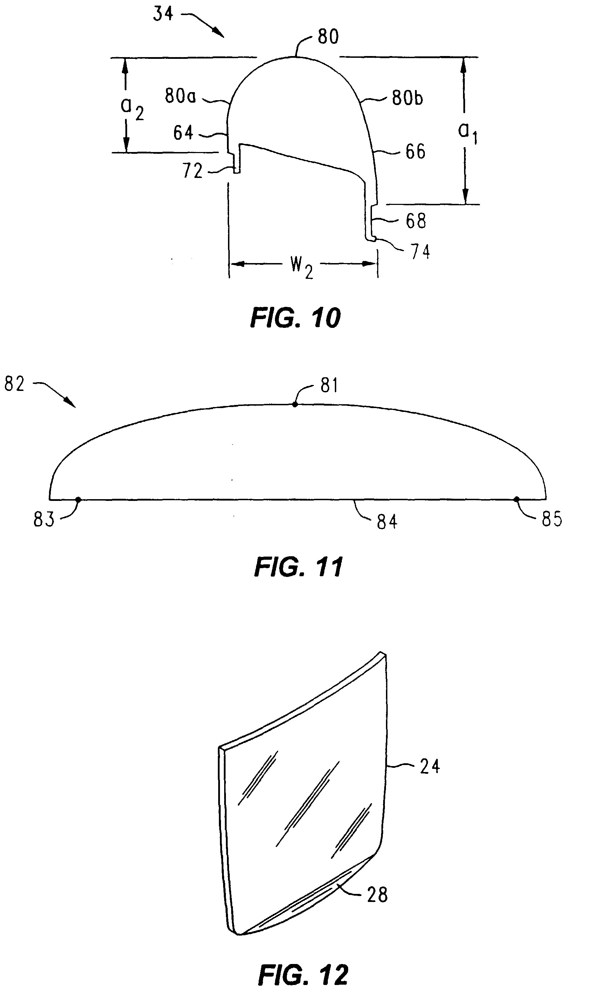

In Fig. 1, there is illustrated a hand held scanning device 10. The hand held scanning device 10 has a housing 12 for holding the components of the hand held scanning device which may be the same as those described in the above-identified patents. The housing 12 has a front portion 14, having a front surface 16. A plurality of control buttons 18 and 20 are mounted in the front portion 14 and are exposed through openings in the front surface 16. In one embodiment the buttons 18, 20 are provided in corresponding recesses 19, 21 which may be as deep or nearly as deep as the height of the buttons to help prevent accidental actuation of the buttons 18, 20. An image display window opening 22 is formed in the front portion 14 and is covered by a transparent member 24 which is seated in a recess 26 in the front portion 14 surrounding the image display window opening 22. The thickness of the transparent member 24, except at portion 28, is the same as the depth of the recess 26. Transparent member 24 may be formed from polycarbonate such as Lexan® available from GE or other suitable transparent material. Transparent member 24 is shown in Fig. 12. An arcuately shaped portion 28 which may be duck tail shaped, is provided which may be separately formed or may be integral with the transparent member 24 and projects outwardly from the front surface 16. In one embodiment it projects outwardly about 2.0mm. As illustrated in Figs. 5 and 6, the portion 28 cooperates with another spaced apart portion 30, as described further below, to hold the control buttons 18 and 20 and the portion of the transparent member 24 which covers display window opening 22 in a spaced apart relationship with a support surface 32 when the hand held scanning device 10 is placed, front face down, on the support surface 32. A cover 34, explained more fully below, is connected to the hand held scanning device 10. The portion 28 also provides tactile feedback to the user suggesting where the user's thumb or finger tips should be positioned to grip the device 10 during scanning.

In Fig. 2, there is illustrated the back of the hand held scanning device 10 comprising a back portion 40 having a back surface 42. A recess 44 is formed in the back portion 40 and a control button 46 is mounted on the back portion 40 so that the control button projects through an opening in the back surface 42. The front portion 14 and the back portion 40 are supported on a base 48 and held together by conventional structures such as screws threaded into bosses (not shown).

In Fig. 3, there is illustrated the bottom of the hand held scanning device 10 comprising a bottom surface 50 of base 48. An opening 52 is formed in the bottom surface 50 and extends through base 48 so that imaging sensors (not shown) in the hand held scanning device 10 may be exposed to the object being scanned. Other openings 54 and 56 are formed in the bottom surface 50 so that navigation sensors in the hand held scanning device 10 may be exposed to the object being scanned.

In one preferred embodiment the height "h" of the device 10 may be about 104mm; the length "l" may be about 139mm; the width "W₁^{"}, at the base may be about 38mm; and the width "W₂" at the top cover 34 may be about 39mm.

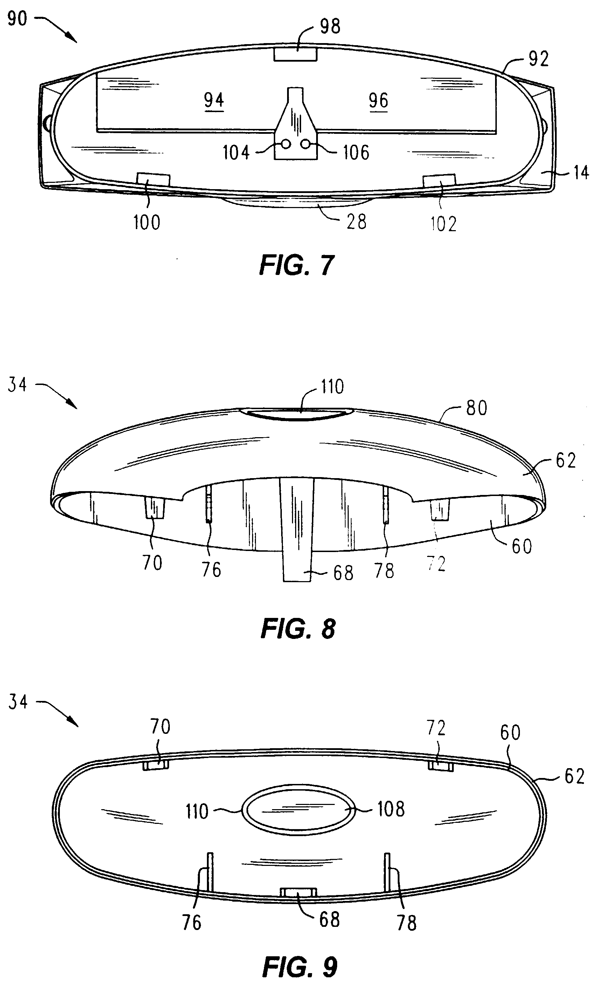

The cover 34 is illustrated in Figs. 8-10 and comprises an inner layer 60 and an outer layer 62.

As illustrated in Fig. 9, the exposed bottom edge of the inner layer 60 forms an opening in the inner layer and has a configuration that is generally curvilinear in shape. The outer layer 62 conforms to the shape of the inner layer 60 but is slightly larger. The shape of the opening formed by the inner layer 60 is somewhat governed by the components mounted in the hand held scanning device 10. However, the generally curvilinear shape illustrated in Fig. 9 is preferred. Layer 60 maybe about 1.3mm thick and layer 62 may be about 1.2mm thick.

As illustrated in Fig. 10, the cover 34 has a front portion 64 and a back portion 66 with the back portion 66 extending downwardly a distance greater than the front portion 64. A prong 68 extends downwardly from the back portion 66 and two prongs 70 and 72 extend downwardly from the front portion 64. The prongs 68, 70 and 72 can be integral with the inner layer 60 or can be separate elements secured to the inner layer 60. The prong 68 has a hook portion 74 for a purpose described below. Two reinforcing ribs 76 and 78 are secured to the inner layer 60 or may be integral therewith. In a preferred embodiment of the invention; the inner layer 60 is formed from a relatively hard plastic material such as polycarbonate and the outer layer is formed from a relatively soft plastic material such as Santoprene®. Also, the outer layer is preferably molded over the inner layer. However, the outer layer may be secured to the outer layer in other ways, such as by an adhesive.

The shape of the outer surface of the cover 34 is designed to be compatible with the hand of the user of the hand held scanning device 10 in a variety of different positions between the hand of the user and the hand held scanning device 10. The shape of the outer surface has no sharp corners or edges that would result in a discomfort to the user or require the positioning of the hand of the user at awkward positions. The shape of the outer surface also is symmetrical so that the hand held scanning device can be used by a right handed or left handed user.

In a preferred embodiment of the invention, the top portion 80 of the outer surface of the cover 34 between the points 80 a and b is generally a semi-ellipsoidal surface and is formed by rotating the semi-ellipse 82 of Fig. 11 about its axis 84 through 180 degrees. The semi-ellipse 82 has an axial length of about 131mm, and apex 81 of about 19mm and focal points 83, 85 spaced 9mm from each axial end. The length of axis 84 may be about 131mm. Although the outer surface of the top portion 80 in the illustrated embodiment does not conform exactly to the semi-ellipsoid formed by rotating the ellipse 82, the outer surface closely approaches it. The portions of the cover 34 below the top portion 80 expand slightly in a curvilinear path. The rear height "a₁" of the cover may be about 38mm and the front height "a₂" may be about 19mm. The compliant nature of the relatively soft plastic material of the outer layer 62 provides a tactile feedback to the user saying "hold here". Also, the relatively soft plastic outer layer 62 provides a non-slip gripping surface.

In Fig. 7, there is illustrated the top portion 90 of the hand held scanning device 10. The top portion 90 may have an abutment ledge 92 for purposes described below. Two receptacles 94 and 96 are provided in the top portion 90 for the placement of a battery (not shown) in each receptacle. An opening 98 is formed in the top portion 90 so that the prong 68 may pass therethrough. Openings 100 and 102 are formed in the top portion 90 so that prongs 70 and 72 may pass therethrough. Openings 104 and 106 are also formed in the top portion 90 so that infra-red rays from the components located within the hand held scanning device may pass therethrough. The cover 34 is provided with an opening 108 which is closed by an closure 110 that is formed from a material which permits the passage of the infra-red rays. Closure 110 may be integrally formed with inner layer 60 and project through an opening in the outer layer 62 or, in the alternative. may be an insert that covers an opening passing through both layers 60 and 62.

After batteries have been placed in the receptacles 94 and 96, the cover 34 is attached by placing the prongs 70 and 72 in the openings 100 and 102 and the prong 68 in the opening 98. A force is applied to the cover 34 to move the cover 34 downwardly until the exposed edge of the inner layer 60 contacts the abutment ledge 92. At this time, the hook portion 74 engages the inner edge of the opening 98 to lock the cover 34 in place. The cover 34 may be removed by pressing inwardly against the cover 34 at the location adjacent to the prong 68 and exerting an outwardly directed force on the cover 34. The relative positions of the abutment ledge 92, the inner layer 60 and the outer layer 62 are illustrated in Fig. 6. Portion 30 is actually two "eye brow" buttons 31, 33 which invoke/generate a "help" screen menu and a "tools" screen menu, respectively when pressed. Since the help menu or the tools menu are just display screens it doesn't hurt anything to accidentally push these buttons, i.e., no new scanned data will be generated and no stored scanned data will be lost if these buttons are pressed, thus, they are ok to use as an abutment/spacer. However, this same spacer abutment function could be provided by a lip, etc., formed on the housing or the cover. In one embodiment (not shown), the exposed edge of the inner layer 60 abuts against the abutment edge 92 so that the outer layer 62 projects outwardly from the front surface 16 of the front portion 14 to provide the portion 30 to cooperate with the portion 28 in holding the control buttons 18 and 20 spaced from the supporting surface 32.

In use, the hand held scanning device 10 is grasped by the hand of the user and in particular the hand of the user contacts the outer layer 62 of the cover 34. As described above, the inner surface of the palm, fingers and thumb of the operator may be defined as having a longitudinal axis extending in a direction generally parallel to the fingers. The cover also has a longitudinal axis. The cover is compatible with the inner surface of the palm, fingers and thumb of the operator so that the hand held scanning device may be comfortably held by the operator with both of the longitudinal axes extending in the same direction or with the longitudinal axis of the cover extending in a direction transverse to the longitudinal axis of the inner surface of the palm, fingers and thumb or at various angular relationships therebetween. This permits the user to grasp the hand held scanning device in a plurality of ways so as to avoid fatigue and improve capturing performance.

It is contemplated that the inventive concepts herein described may be variously otherwise embodied and it is intended that the appended claims be construed to include alternative embodiments of the invention except insofar as limited by the prior art.

## Claims

1. A hand held scanning device (10) comprising:
a housing (12) for holding the components of an electronic scanning device;
said housing having a top portion (90);
said top portion having at least one receptacle (94) formed therein for receiving a battery;
a cover (34) removably connected to said top portion;
said cover having an outer configuration which is substantially curvilinear to be compatible with the inner surface of the palm, fingers and thumb of a human hand.

2. A hand held scanning device as in claim 1 wherein:
said housing (12) being formed from a relatively hard plastic material;
said cover having an inner layer (60) and an outer layer (62);
said inner layer being formed from a relatively hard plastic material; and
said outer layer being formed from a relatively soft plastic material.

3. A hand held scanning device as in claim 1 or 2 and further comprising:
at least a portion of said outer configuration is a substantially semiellipsoidal (82) surface.

4. A hand held scanning device as in claim 1, 2, or 3 wherein:
said inner surface of said palm, fingers and thumb having a longitudinal axis extending in a direction generally parallel to said fingers;
said cover (34) having a longitudinal axis; and
said cover being compatible to said inner surface of said palm, fingers and thumb if held with both of said longitudinal axes extending in the same directions or with said longitudinal axis of said cover extending in a direction transverse to said longitudinal axis of said inner surface of said palm, fingers and thumb.

5. A hand held scanning device as in claim 1, 2, 3, or 4 and further comprising:
said cover having a front portion (64) and a back portion (66);
said top portion having a plurality of openings (98, 100, 102) formed therein; and
said cover having a plurality of prongs (68, 70, 72) projecting downwardly therefrom and located to fit into said plurality of openings to hold said cover attached to said top portion.

6. A hand held scanning device as in claim 2, 3, 4, or 5 and further comprising:
said outer layer having an opening (108) formed therein;
a portion (110) of said inner layer being located to close said opening; and
said portion of said inner layer being formed from a material permitting the passage therethrough of infra red signals

7. A hand held scanning device comprising:
a housing (12) for holding the components of an electronic scanning device;
said housing having a top portion;
said top portion having an outer configuration which is substantially curvilinear to be compatible with the inner surface of the palm, fingers and thumb of a human hand.

8. A hand held scanning device as in claim 7 and further comprising:
said top portion having an inner layer (60) and an outer layer (62);
said inner layer being formed from a relatively hard plastic material; and
said outer layer being formed from a relatively soft plastic material.

9. A hand held scanning device as in claim 7 or 8 wherein:
said inner surface of said palm, fingers and thumb having a longitudinal axis extending in a direction generally parallel to said fingers;
said top portion having a longitudinal axis; and
said top portion being compatible to said inner surface of said palm, fingers and thumb if held with bath of said longitudinal axes extending in the same directions or with said longitudinal axis of said top portion extending in a direction transverse to said longitudinal axis of said inner surface of said palm, fingers and thumb.

10. A hand held scanning device as in claim 7, 8, or 9 and further comprising:
at least a portion of said top portion having an outer configuration that is a substantially semi-ellipsoidal surface to be compatible with the inner surface of the palm, fingers and thumb of a human hand; and
said outer layer has a coefficient of friction with a human hand of at least .9.
